# EUROPEAN PATENT APPLICATION

(11) **EP 2 816 836 A1**
(43) Date of publication of application: **24.12.2014**
(21) Application number: 12871168.6
(22) Date of filing: 16.03.2012
(51) Int. Cl.: H04W 28/00

(54) **REFERENCE SIGNAL TRANSMITTING METHOD, RECEIVING METHOD AND DEVICE**

(71) Applicant: Huawei Technologies Co., Ltd., Shenzhen, Guangdong 518129 (CN)
(72) Inventor: MAZZARESE, David, Shenzhen Guangdong 518129 (CN); REN, Xiaotao, Shenzhen Guangdong 518129 (CN); SUN, Jingyuan, Shenzhen Guangdong 518129 (CN); XIA, Liang, Shenzhen Guangdong 518129 (CN)
(74) Representative: Haley, Stephen
(86) International application number: PCT/CN2012/072467
(87) International publication number: WO 2013/134957

(57) **Abstract**

The present invention provides a reference signal sending method, a receiving method and an apparatus. The sending method includes: determining, by a base station, a parameter configuration format for the reference signal from the at least two sets of parameter configuration formats, where the reference signal is configured with at least two sets of parameter configuration formats of the reference signal, and at least one parameter in different parameter configuration formats of the reference signal has a different configuration granularity; and performing, by the base station, parameter configuration for the reference signal by using the determined parameter configuration format, and sending the reference signal to a terminal. Another sending method includes: determining, by a base station, a parameter configuration subformat for a key parameter of a reference signal, where the key parameter, in the parameter configuration format of the reference signal, is configured with a parameter configuration subformat having a different configuration granularity; and performing, by the base station by using the parameter configuration format of the reference signal for which the parameter configuration subformat is determined, parameter configuration for the reference signal, and sending the reference signal to a terminal.

## Description

### TECHNICAL FIELD

Embodiments of the present invention relate to communications technologies, and in particular, to a reference signal sending method, a receiving method and an apparatus.

### BACKGROUND

Coordinated multi-point processing (CoMP) is introduced to the fourth generation mobile telecommunications system to obtain higher user throughput. In a CoMP scenario, multiple cells provide a data transmission service to one UE at the same time. Unlike a conventional service of a single cell, in the CoMP scenario, the UE needs to measure a reference signal CSI-RS delivered by multiple serving base stations, estimate downlink channel information from multiple base stations, and feed back the downlink channel information. In a CoMP system, at present, a channel state information reference signal (Channel State Information Reference Signal, CSI-RS for short) is generally used to measure a downlink channel. However, many parameters need to be configured for the CSI-RS, and a base station notifies a terminal of configuration of these parameters by using high-level signaling, so that the terminal may learn parameter configuration information of the CSI-RS that the terminal needs to receive.

A CSI-RS resource further includes a port (Port). One CSI-RS resource may be formed by one/two/four/eight ports. In the prior art, all CSI-RS resources have only one CSI-RS parameter configuration format, where parameter configuration is performed on a per CSI-RS resource basis. If a CSI-RS resource configured by the base station for the terminal is a port of the CSI-RS resource, performing CSI-RS parameter configuration for the terminal on a CSI-RS resource basis may cause a CSI-RS parameter configuration to be inaccurate and cause CSI-RS resource scheduling to be inaccurate, and therefore the spectral efficiency of a system is reduced.

### SUMMARY

Embodiments of the present invention provide a reference signal sending method, a receiving method and an apparatus, so as to correct a defect in the prior art that a parameter configuration of a reference signal is inaccurate.

According to one aspect, an embodiment of the present invention provides a reference signal sending method, wherein a reference signal is configured with at least two sets of parameter configuration formats of the reference signal, and at least one parameter in different parameter configuration formats of the reference signal has a different configuration granularity, and the method includes:
determining, by a base station, a parameter configuration format for the reference signal from the at least two sets of parameter configuration formats; and
performing, by the base station, parameter configuration for the reference signal by using the determined parameter configuration format, and sending the reference signal to a terminal.

According to one aspect, an embodiment of the present invention provides a parameter receiving method, wherein a reference signal is configured with at least two sets of parameter configuration formats of the reference signal, and at least one parameter in different parameter configuration formats of the reference signal has a different configuration granularity, and the method includes:
determining, by a terminal according to notification signaling or a set condition of a base station, a parameter configuration format for the reference signal from the at least two sets of parameter configuration formats; and
determining, by the terminal by using the determined parameter configuration format, a parameter that is of the reference signal and received from the base station.

According to one aspect, an embodiment of the present invention provides a reference signal sending apparatus, including:
a determining module, configured to determine a parameter configuration format for the reference signal from at least two sets of parameter configuration formats, wherein the reference signal is configured with at least two sets of parameter configuration formats of the reference signal, and at least one parameter in different parameter configuration formats of the reference signal has a different configuration granularity; and
a configuring module, configured to perform parameter configuration for the reference signal by using the parameter configuration format determined by the determining module, and send the reference signal to a terminal.

According to one aspect, an embodiment of the present invention provides a parameter receiving apparatus, including:
a determining module, configured to determine, according to notification signaling or a set condition of a base station, a parameter configuration format for the reference signal from at least two sets of parameter configuration formats, wherein the reference signal is configured with at least two sets of parameter configuration formats of the reference signal, and at least one parameter in different parameter configuration formats of the reference signal has a different configuration granularity; and
a receiving module, configured to determine, by using the parameter configuration format determined by the determining module, a parameter that is of the reference signal and received from the base station.

According to a reference signal sending method, a receiving method and an apparatus provided by the embodiments of the present invention, at least two sets of parameter configuration formats are configured on a base station and a terminal for a reference signal, at least one parameter in different parameter configuration formats of the reference signal has a different configuration granularity. When the base station configures the parameter of the reference signal, the base station selects a parameter configuration format of a configuration granularity of the parameter of the reference signal from all parameter configuration formats of the reference signal. Because the base station has at least two sets of parameter configuration formats to perform parameter configuration for the reference signal, an objective of performing accurate parameter configuration for the reference signal may be achieved, which can improve accuracy of reference signal resource scheduling and the system spectral efficiency, and reduce a signaling overhead.

According to another aspect, an embodiment of the present invention further provides a reference signal sending method, where
at least one parameter in a parameter configuration format of a reference signal is configured with a parameter configuration subformat having a different configuration granularity, and the method includes:
determining, by a base station, a parameter configuration subformat for a key parameter of the reference signal, wherein the key parameter, in the parameter configuration format of the reference signal, is configured with a parameter configuration subformat having a different configuration granularity; and
performing, by the base station by using a parameter configuration format of the reference signal for which the parameter configuration subformat is determined, parameter configuration for the reference signal, and sending the reference signal to a terminal.

According to another aspect, an embodiment of the present invention further provides a parameter receiving method, where at least one parameter in a parameter configuration format of a reference signal is configured with a parameter configuration subformat having a different configuration granularity, and the method includes:
determining, by a terminal according to notification signaling or a set condition of a base station, a parameter configuration subformat for a key parameter of the reference signal, wherein the key parameter, in the parameter configuration format of the reference signal, is configured with a parameter configuration subformat having a different configuration granularity; and
determining, by the terminal by using the parameter configuration format of the reference signal for that the parameter configuration subformat is determined, a parameter that is of the reference signal and received from the base station.

According to another aspect, an embodiment of the present invention further provides a reference signal sending apparatus, including:
a determining module, configured to determine a parameter configuration subformat for a key parameter of the reference signal, wherein the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity; and
a configuring module, configured to perform, by using the parameter configuration format of the reference signal for which the parameter configuration subformat is determined by the determining module, parameter configuration for the reference signal, and send the reference signal to a terminal.

According to another aspect, an embodiments of the present invention further provides a parameter receiving apparatus, including:
a determining module, configured to: according to notification signaling or a set condition of a base station, determine a parameter configuration subformat for a key parameter of the reference signal, wherein the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity; and
a receiving module, configured to: by using the parameter configuration format of the reference signal for which the parameter configuration subformat is determined by the determining module, determine a parameter that is of the reference signal and received from the base station.

According to a reference signal sending method, a receiving method and an apparatus provided by the embodiments of the present invention, at least one parameter in a parameter configuration format of a reference signal is configured with a parameter configuration subformat having a different configuration granularity on a base station and a terminal; when the base station performs parameter configuration for the reference signal, the base station determines a parameter configuration subformat for a key parameter, in the parameter configuration format of the reference signal, that is configured with the determined parameter configuration subformat having a different configuration granularity. Because a parameter configuration subformat having a different granularity may be selected when configuration is performed for the key parameter of the reference signal, an objective of performing accurate parameter configuration for the reference signal is achieved, which can also improve accuracy of reference signal resource scheduling and the system spectral efficiency, and reduce a signaling overhead.

### BRIEF DESCRIPTION OF DRAWINGS

FIG. 1 is a flowchart of a reference signal sending method according to an embodiment of the present invention;
FIG. 2 is a reference signal resource allocation diagram according to an embodiment of the present invention;
FIG. 3 is a flowchart of a parameter receiving method according to an embodiment of the present invention;
FIG. 4 is a flowchart of another reference signal sending method according to an embodiment of the present invention;
FIG. 5 is a flowchart of another parameter receiving method according to an embodiment of the present invention;
FIG. 6A is a schematic structural diagram of a reference signal sending apparatus according to an embodiment of the present invention;
FIG. 6B is a schematic structural diagram of another reference signal sending apparatus according to an embodiment of the present invention;
FIG. 7 is a schematic structural diagram of a parameter receiving apparatus according to an embodiment of the present invention;
FIG. 8A is a schematic structural diagram of another reference signal sending apparatus according to an embodiment of the present invention;
FIG. 8B is a schematic structural diagram of a reference signal sending apparatus according to an embodiment of the present invention; and
FIG. 9 is a schematic structural diagram of another parameter receiving apparatus according to an embodiment of the present invention.

### DESCRIPTION OF EMBODIMENTS

Embodiments of the present invention are applicable to an orthogonal frequency division multiplexing (Orthogonal Frequency Division Multiplexing, OFDM) system, a code division multiple access (Code Division Multiple Access, CDMA) system, a time division multiple access (Time Division Multiple Access, TDMA) system, and other mobile telecommunications systems. A reference signal in the embodiments of the present invention may be a CSI-RS or a reference signal of another type.

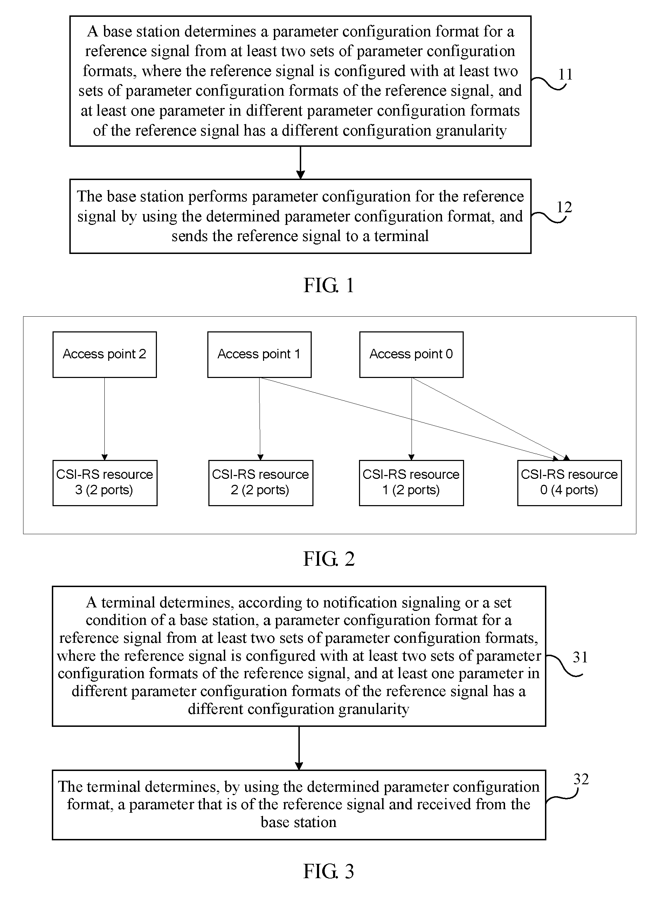

FIG. 1 is a flowchart of a reference signal sending method according to an embodiment of the present invention. As shown in FIG. 1, the reference signal sending method provided by this embodiment includes the following:
Step 11: A base station determines a parameter configuration format for the reference signal from at least two sets of parameter configuration formats, where the reference signal is configured with the at least two sets of parameter configuration formats of the reference signal, and at least one parameter in different parameter configuration formats of the reference signal has a different configuration granularity.

For each type of reference signal, at least two sets of parameter configuration formats are configured on the base station. Each set of parameter configuration formats includes subformats of all parameters. At least one parameter in different parameter configuration formats has a different configuration granularity. That is, a difference between different parameter configuration formats lies in that at least one parameter in different parameter configuration formats has a different configuration granularity. For example, for one parameter, which is power configuration information, of a CSI-RS, a configuration granularity of the parameter in one set of parameter formats is a reference signal resource, and a configuration granularity of the parameter in another set of parameter configuration formats is a reference signal port or port group. The configuration granularity is performing configuration according to a reference signal resource, performing configuration according to a reference signal port, or performing configuration according to a reference signal port group.

The parameter of the reference signal includes one or a combination of multiple ones of the following information: quantity of antenna ports, index number of reference signal resource configuration, index number of subframe configuration, power configuration information (Pc), virtual cell identity (Virtual Cell ID or X), index number of a reference signal pattern, period, index number of subframe offset, cyclic prefix (CP) type indication information, and timeslot number information.

In each set of parameter configuration formats of the reference signal configured by the base station, each parameter of the reference signal has only one type of configuration granularity format. The configuration granularity of each parameter may be different, but in different parameter configuration formats, at least one parameter has a different configuration granularity. When the configuration granularity of the parameter of the reference signal is a reference signal port or port group, some parameters of the reference signal may be configured by a using the reference signal resource as a granularity, where and the configuration of the some parameters is irrelevant to the reference signal port; whereas some parameters need to be configured by using the reference signal port or port group as a granularity, where the configuration of the some parameters is related to the reference signal port. Therefore, configuration granularities of formats of different parameters in the same set of parameter configuration formats may be different.

As shown in table 1, in a parameter configuration format 1, configuration granularities of subformats of all parameters are a CSI-RS resource; in a parameter configuration format 2, configuration granularities of power configuration information and a virtual cell identity are a reference signal port or port group, and two reference signal ports or group ports are allocated to a reference signal; and in a parameter configuration format n, configuration granularities of power configuration information and a virtual cell identity are a reference signal port or port group, and n reference signal ports or port groups are allocated to a reference signal.

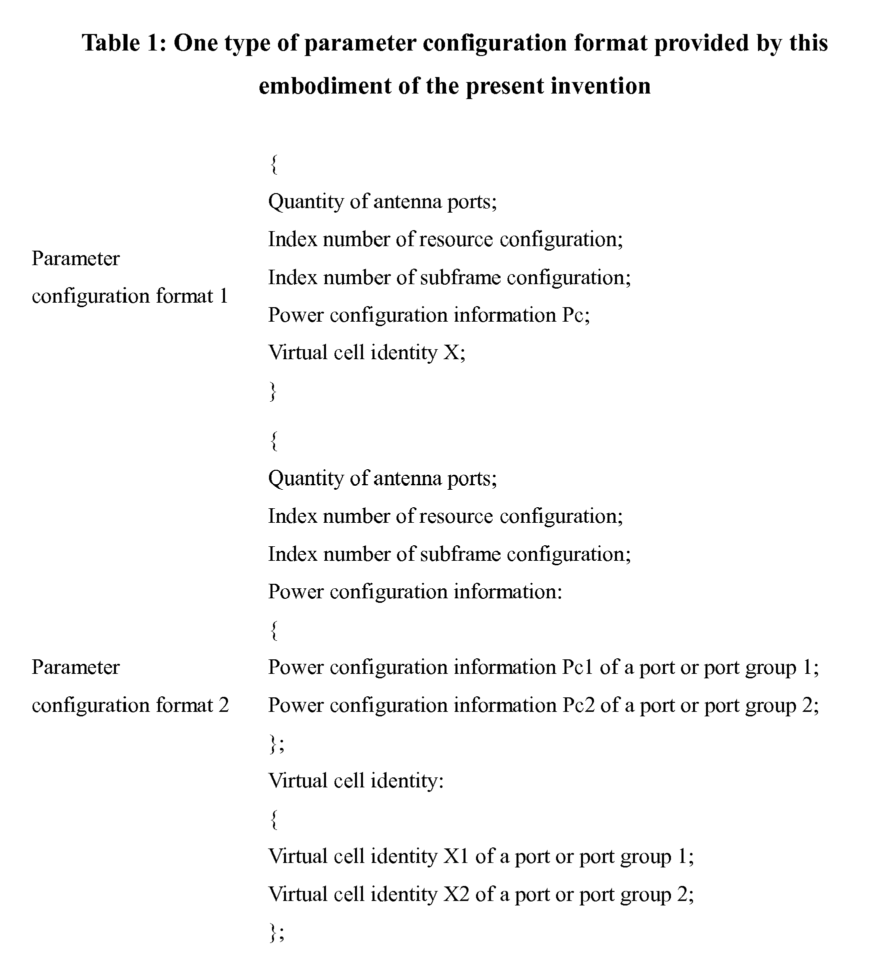

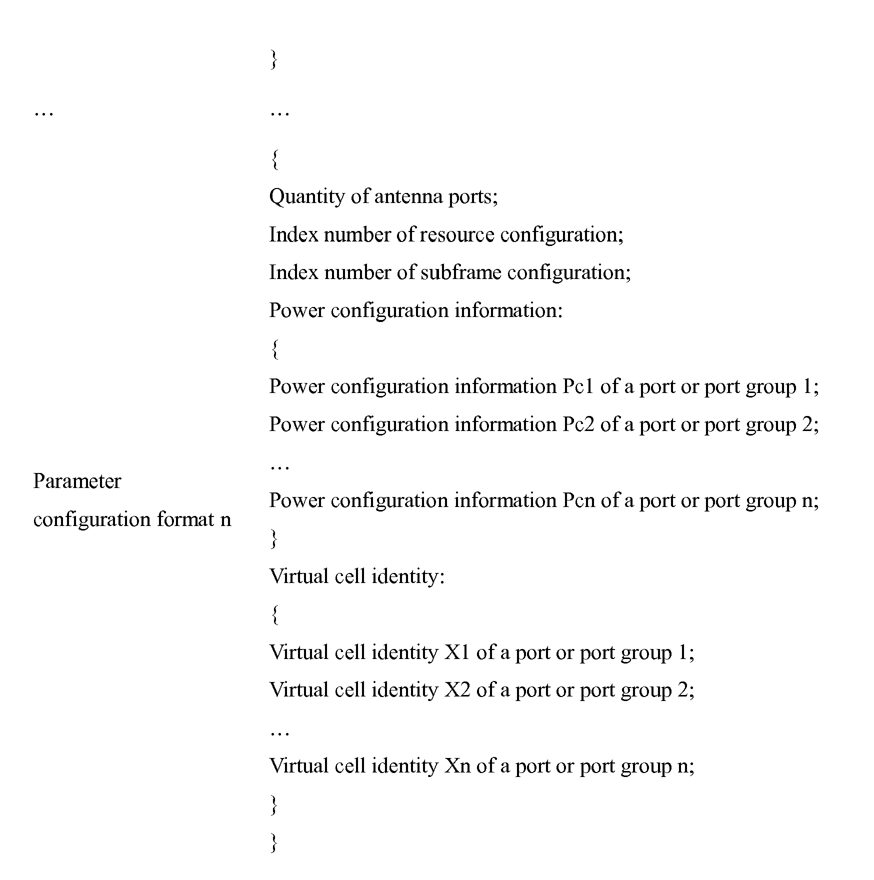

If the reference signal is configured with n reference signal ports or port groups, it is determined that the parameter configuration format n shown in table 1 is used to configure a parameter of the reference signal; if the configuration granularity of the parameter of the reference signal is a reference signal resource, it is determined that the parameter configuration format 1 shown in table 1 is used to configure the parameter of the reference signal.

Step 12: The base station performs parameter configuration for the reference signal by using the determined parameter configuration format, and sends the reference signal to a terminal.

When the base station configures the parameter of the reference signal, at least two sets of parameter configuration formats are available for selection; therefore, it may be selected to make the parameter configuration of the parameter signal satisfy a requirement of the configuration granularity of the parameter of the reference signal. Specifically, a set of parameter configuration formats suitable for the configuration granularity of the parameter of the reference signal may be determined according to the configuration granularity of the parameter of the reference signal, thereby satisfying an accuracy requirement, of the configuration granularity of the parameter of the reference signal, for the parameter configuration. For example, when the configuration granularity of the parameter of the reference signal is performing configuration according to the reference signal resource, a set of parameter configuration formats suitable for the reference signal resource is determined; when the configuration granularity of the parameter of the reference signal is performing configuration according to the reference signal port, a set of parameter configuration formats suitable for the reference signal port is determined; and when the configuration granularity of the parameter of the reference signal is performing configuration according to the reference signal port group, a set of parameter configuration formats suitable for the reference signal port group is determined.

Optionally, the base station notifies, by using signaling, the terminal of the parameter configuration format that is used when performing parameter configuration for the reference signal. After receiving the notification signaling of the base station, the terminal reads a parameter in a parameter configuration message according to the parameter configuration format notified by the base station. In addition, the terminal may also determine, according to a set condition negotiated with the base station and with reference to a known parameter, for example, a quantity of antenna ports, of the terminal, the parameter configuration format used by the base station when performing parameter configuration for the reference signal, and read the parameter according to the determined parameter configuration format.

According to a reference signal sending method provided by this embodiment of the present invention, at least two sets of parameter configuration formats are configured on a base station and a terminal for a reference signal, at least one parameter in different parameter configuration formats of the reference signal has a different configuration granularity. When the base station configures the parameter of the reference signal, the base station selects the parameter configuration format of the configuration granularity of the parameter of the reference signal from all parameter configuration formats of the reference signal. Because the base station has at least two sets of parameter configuration formats to perform parameter configuration for the reference signal, an objective of performing accurate parameter configuration for the reference signal may be achieved, which can improve accuracy of reference signal resource scheduling and the system spectral efficiency, and reduce a signaling overhead.

As shown in FIG.2, a CSI-RS resource 0 is allocated to an access point 0 and an access point 1, where each access point is separately allocated with two ports. CSI-RS resources 1 to 3 are respectively allocated to the access point 0, the access point 1, and an access point 2. For the CSI-RS resource 0, because the resource is allocated to the access point 0 and the access point 1, each access point is separately allocated with two ports, Cell IDs of the access point 0 and the access point 1 are different, a CSI-RS parameter needs to be configured by using a CSI-RS port group (two ports are one group) as a configuration granularity, so as to differentiate the Cell IDs. Therefore, the base station selects a CSI-RS parameter configuration format that is suitable for the CSI-RS port group from all CSI-RS parameter configuration formats to perform parameter configuration for the CSI-RS.

As shown in FIG.2, for the other CSI-RS resources 1 to 3, because a case of cross-node allocation does not exist, parameter configuration may be performed not by using the CSI-RS port group as the configuration granularity, and the CSI-RS parameter configuration may be performed by using a CSI-RS resource as a configuration granularity. The base station selects a CSI-RS parameter configuration format that is suitable for the CSI-RS resource from all CSI-RS parameter configuration formats to perform parameter configuration for the CSI-RS.

Therefore, when one reference signal resource is allocated to one access point, a set of parameter configuration formats that is set according to the reference signal resource is determined; when one reference signal port group is allocated to different access points, a set of parameter configuration formats that is set according to the reference signal port is determined; or when all ports in one of the reference signal resource port group are allocated to a same access point, a set of parameter configuration formats that is set according to the reference signal port group is determined.

When the configuration granularity of the parameter of the reference signal is the reference signal resource, a set of parameter configuration formats whose configuration granularity is the reference signal resource is determined; when the configuration granularity of the parameter of the reference signal is the reference signal port or port group, a set of parameter configuration formats whose configuration granularity is the reference signal port is determined; and when the configuration granularity of the parameter of the reference signal is the reference signal port group, a set of parameter configuration formats whose configuration granularity is the reference signal port group is determined.

FIG. 3 is a flowchart of a parameter receiving method according to an embodiment of the present invention. As shown in FIG. 3, the parameter receiving method provided by this embodiment includes the following:

Step 31: A terminal determines, according to notification signaling or a set condition of a base station, a parameter configuration format for a reference signal from at least two sets of parameter configuration formats, wherein the reference signal is configured with at least two sets of parameter configuration formats of the reference signal, and at least one parameter in different parameter configuration formats of the reference signal has a different configuration granularity.

The configuration granularity of the parameter of the reference signal is performing configuration according to a reference signal resource, performing configuration according to a reference signal port, or performing configuration according to a reference signal port group. The parameter of the reference signal includes one or a combination of multiple ones of the following information: quantity of antenna ports, index number of reference signal resource configuration, index number of subframe configuration, power configuration information (Pc), virtual cell identity (Virtual Cell identity or X), index number pattern period, index number of subframe offset, cyclic prefix (CP) type indication information, and timeslot number information.

Step 32: The terminal determines, by using the determined parameter configuration format, a parameter that is of the reference signal and received from the base station.

The terminal may receive signaling that is sent by the base station and notifies the terminal of the parameter configuration format that is used when performing parameter configuration for the reference signal. The terminal determines, according to the notification signaling of the base station, the parameter configuration format used for performing parameter configuration for the reference signal. The terminal may also determine, according to a set condition negotiated with the base station and with reference to a parameter of the terminal, the parameter configuration format used for performing parameter configuration for the reference signal. For example, after the terminal is switched on, the terminal obtains the quantity of antenna ports from broadcast signaling; determines, according to the quantity of antenna ports and the negotiated sett condition, the parameter configuration format used for performing parameter configuration for the reference signal; and determines, by using the determined parameter configuration format, the parameter that is of the reference signal and received from the base station.

According to a parameter receiving method provided by this embodiment, a reference signal is configured with at least two sets of parameter configuration formats of the reference signal, and at least one parameter in different parameter configuration formats of the reference signal has a different configuration granularity. When a terminal receives the parameter of the reference signal, the terminal selects a parameter configuration format from all parameter configuration formats of the reference signal according to notification signaling or a set condition of the base station, so that an objective of performing accurate parameter configuration for the reference signal may be achieved, which can improve accuracy of reference signal resource scheduling and the system spectral efficiency, and reduce a signaling overhead.

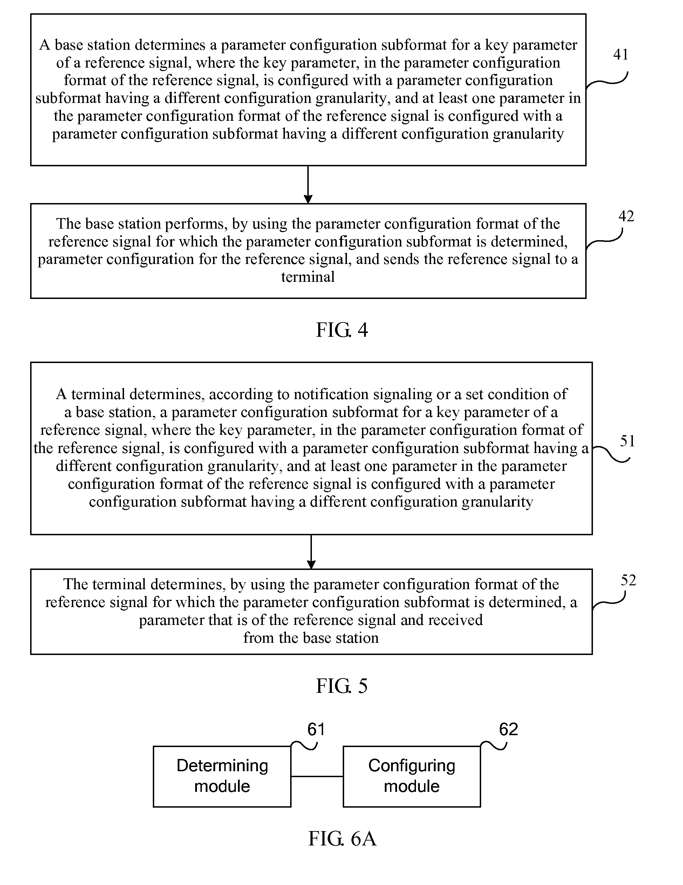

FIG. 4 is a flowchart of another reference signal sending method according to an embodiment of the present invention. A difference between the embodiments corresponding to FIG. 1 and FIG. 3 lies in that, there are multiple sets of parameter configuration formats in the embodiments corresponding to FIG. 1 and FIG. 3, and each set of parameter configuration formats include subformats of all parameters; however, in this embodiment, a parameter signal has only one set of parameter configuration formats, the parameter configuration format includes subformats of all parameters, and at least one parameter has a subformat of a different configuration granularity. As shown in FIG. 4, the reference signal sending method provided by this embodiment includes the following:

Step 41: A base station determines a parameter configuration subformat for a key parameter of a reference signal, where the key parameter, in a parameter configuration format of the reference signal, is configured with a parameter configuration subformat having a different configuration granularity, and at least one parameter in the parameter configuration format of the reference signal is configured with a parameter configuration subformat having a different configuration granularity.

The configuration granularity of the parameter of the reference signal is performing configuration according to a reference signal resource, performing configuration according to a reference signal port, or performing configuration according to a reference signal port group. In this embodiment, only one set of parameter configuration formats is available, and the set of parameter configuration formats include parameter configuration subformats of all parameters, where some parameters may have a parameter configuration subformat having a different configuration granularity and some parameters have a parameter configuration subformat of one type of configuration granularity; or all parameters have multiple parameter configuration subformats having different configuration granularities. For the set of parameter configuration formats shown in FIG. 2, the parameter includes the quantity of antenna ports, an index number of reference signal resource configuration, an index number of subframe configuration, power configuration information, and a virtual cell identity. The parameter of the quantity of antenna ports, the index number of reference signal resource configuration, and the index number of subframe configuration has only one set of parameter configuration subformats whose configuration granularity is a reference signal resource; the power configuration information and the virtual cell identity separately have parameter configuration subformats of different configuration granularities.

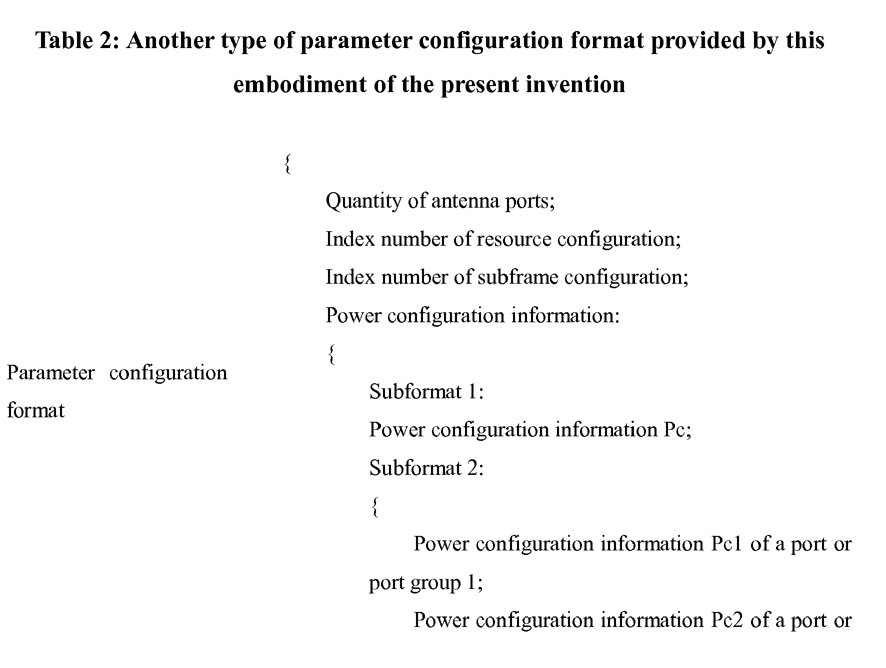

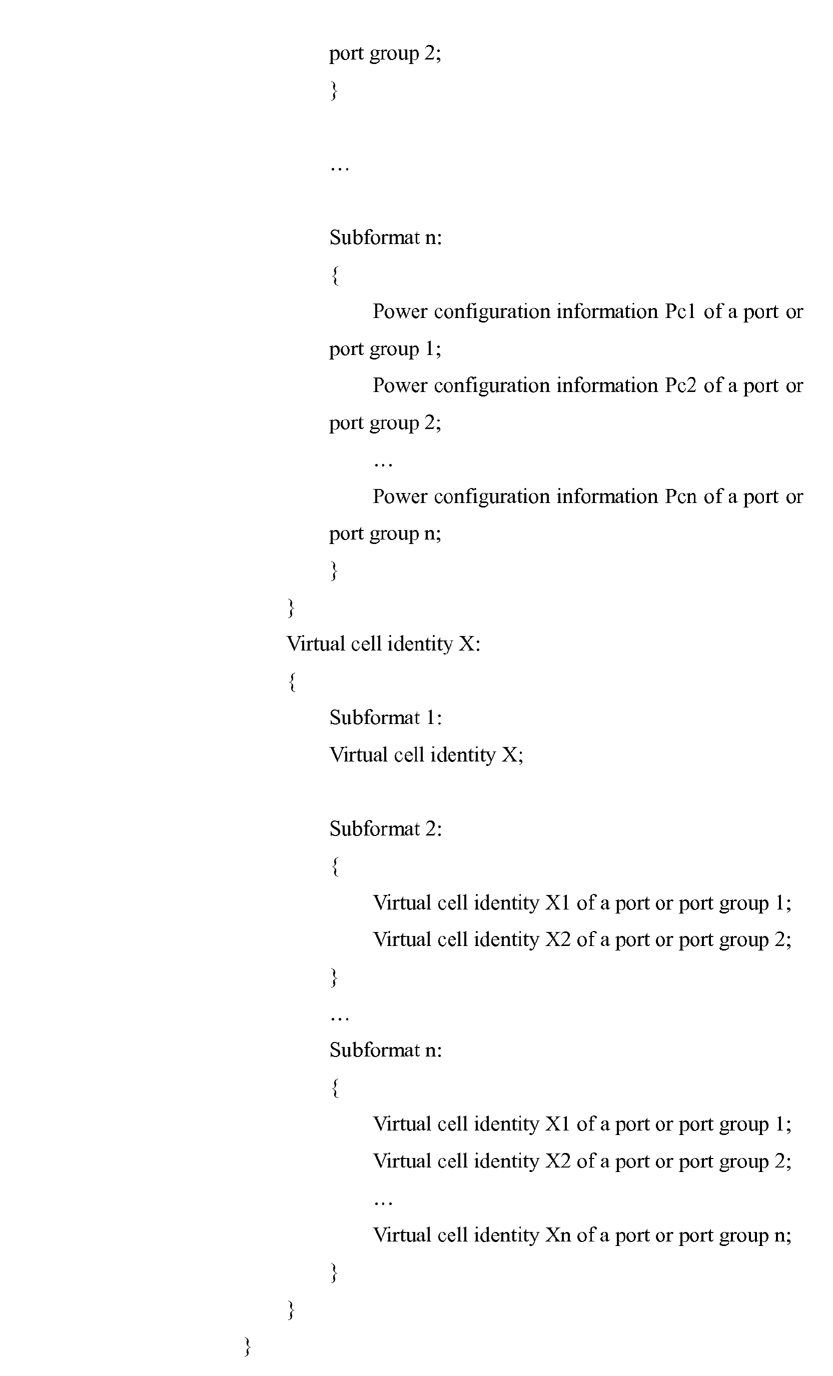

When the base station configures the parameter of the reference signal, for the parameter of a parameter configuration subformat having a different configuration granularity, that is, a key parameter, the base station determines a set of parameter configuration subformats suitable for the configuration granularity of the parameter of the reference signal form all parameter configuration subformats of the key parameter; further, the base station determines, according to the configuration granularity of the parameter of the reference signal, a set of parameter configuration subformats suitable for the configuration granularity of the parameter of the reference signal for the key parameter.

For the parameter with only one type of configuration granularity, the base station directly configures the parameter by using the parameter configuration subformat of the configuration granularity. For example, the power configuration information has multiple parameter subformats with different configuration granularities; if the reference signal is configured with two ports or port groups, a subformat 2 of the power configuration information shown in FIG. 2 is used to perform parameter configuration for the parameter configuration information.

The parameter of the reference signal includes one or a combination of multiple ones of the following information: quantity of antenna ports, index number of reference signal resource configuration, index number of subframe configuration, power configuration information (Pc), virtual cell identity (Virtual Cell ID or X), index number of a reference signal pattern, period, index number of subframe offset, cyclic prefix (CP) type indication information, and timeslot number information.

Step 42: The base station performs, by using the parameter configuration format of the reference signal for which the parameter configuration subformat is determined, parameter configuration for the reference signal, and sends the reference signal to a terminal.

For the key parameter having different configuration granularities, the base station configures the key parameter by using the parameter configuration subformat that is determined for the key parameter; for the parameter having only one type of configuration granularity, the base station directly configures the parameter by using the parameter configuration subformat of the configuration granularity.

Optionally, the base station notifies, by using signaling, the terminal of the parameter configuration subformat that is used by the key parameter. After receiving the notification signaling of the base station, the terminal reads a parameter of a parameter signal according to the parameter configuration subformat notified by the base station. In addition, the terminal may also determine, according to a set condition negotiated with the base station and with reference to a known parameter, for example, a quantity of antenna ports, of the terminal, the parameter configuration subformat used by the base station for the key parameter when performing parameter configuration for the reference signal, and read the key parameter according to the determined parameter configuration subformat.

According to a reference signal sending method provided by this embodiment of the present invention, at least one parameter in a parameter configuration format of a reference signal is configured with a parameter configuration subformat having a different configuration granularity; when performing parameter configuration for the reference signal, a base station determines a parameter configuration subformat for a key parameter, in the parameter configuration format of the reference signal, that is configured with the determined parameter configuration subformat having a different configuration granularity. Because the parameter configuration subformat having a different granularity may be selected when configuration is performed for the key parameter of the reference signal, an objective of performing accurate parameter configuration for the reference signal is achieved, which can also improve accuracy of reference signal resource scheduling and the system spectral efficiency, and reduce a signaling overhead.

Further, the determining, by the base station according to the configuration granularity of the parameter of the reference signal, a set of parameter configuration subformats suitable for the configuration granularity of the parameter of the reference signal for the key parameter of the reference signal includes the following:

Determining, when the configuration granularity of the parameter of the reference signal is performing setting according to the reference signal resource, a set of parameter configuration subformats suitable for the reference signal resource for the key parameter. As shown in FIG. 2, when one reference signal resource is allocated to a same access point, a set of parameter configuration subformats that is set according to the reference signal resource is determined for the key parameter.

Determining, when the configuration granularity of the parameter of the reference signal is performing setting according to the reference signal port, a set of parameter configuration subformats suitable for the reference signal port for the key parameter from all parameter configuration subformats of the key parameter. As shown in FIG. 2, when one reference signal port group is allocated to different access points, a set of parameter configuration subformats that is set according to the reference signal port is determined for the key parameter.

Determining, when the configuration granularity of the parameter of the reference signal is performing setting according to the reference signal port group, a set of parameter configuration subformats suitable for the reference signal port group for the key parameter from all parameter configuration subformats of the key parameter. As shown in FIG. 2, when all ports in one reference signal port group are allocated to a same access point, a set of parameter configuration subformats that is set according to the reference signal port group is determined for the key parameter.

FIG. 5 is a flowchart of another parameter receiving method according to an embodiment of the present invention. As shown in FIG. 5, the method provided by this embodiment includes the following:

Step 51: A terminal determines, according to notification signaling or a set condition of a base station, a parameter configuration subformat for a key parameter of a reference signal, where the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity.

The configuration granularity of the parameter of the reference signal is a reference signal resource, a reference signal port, or a reference signal port group. The parameter of the reference signal includes one or a combination of multiple ones of the following information: quantity of antenna ports, index number of reference signal resource configuration, index number of subframe configuration, power configuration information (Pc), virtual cell identity (Virtual Cell ID or X), index number of a reference signal pattern, period, index number of subframe offset, cyclic prefix (CP) type indication information, and timeslot number information.

Step 52: The terminal determines, by using the parameter configuration format of the reference signal for which the parameter configuration subformat is determined, a parameter that is of the reference signal and received from the base station.

The terminal may receive signaling that is sent by the base station and notifies the terminal of the parameter configuration subformat that is used by the key parameter. The terminal determines, according to the notification signaling of the base station, the parameter configuration format used for performing parameter configuration for the reference signal. The terminal may also negotiate a preset condition with the base station, and determine, with reference to a parameter of the terminal, the parameter configuration format used for performing parameter configuration for the key parameter of the reference signal. For example, after the terminal is switched on, the terminal obtains the quantity of antenna ports from broadcast signaling; determines, according to the quantity of antenna ports and the negotiated preset condition, the parameter configuration format used by the configuration of the key parameter of the reference signal, and receive or read the parameter of the reference signal.

FIG. 6A is a schematic structural diagram of a reference signal sending apparatus according to an embodiment of the present invention. As shown in FIG. 6A, the apparatus provided by this embodiment includes a determining module 61 and a configuring module 62.

The determining module 61 is configured to determine a set of parameter configuration formats suitable for a parameter of a reference signal from all parameter configuration formats of the reference signal, where the reference signal has at least two sets of parameter configuration formats of the reference signal, and at least one parameter in different parameter configuration formats has a different configuration granularity. Specifically, the determining module 61 is specifically configured to determine, according to the configuration granularity of the parameter of the reference signal, a set of parameter configuration formats suitable for configuration granularity of a parameter of the reference signal.

The configuration granularity of the parameter is: performing configuration according to a reference signal resource, performing configuration according to a reference signal port, or performing configuration according to a reference signal port group.

Further, the determining module is specifically configured to: when the configuration granularity of the parameter of the reference signal is performing configuration according to the reference signal resource, determine a set of parameter configuration formats suitable for the reference signal resource; or when the configuration granularity of the parameter of the reference signal is performing configuration according to the reference signal port, determine a set of parameter configuration formats suitable for the reference signal port; or when the configuration granularity of the parameter of the reference signal is performing configuration according to the reference signal port group, determine a set of parameter configuration formats suitable for the reference signal port group. For example, the determining module is specifically configured to: when one of the reference signal resource is allocated to one access point, determine a set of parameter configuration formats that is set according to the reference signal resource; or when one of the reference signal port group is allocated to different access points, determine a set of parameter configuration formats that is set according to the reference signal port; or when all ports in one of the reference signal resource port group are allocated to a same access point, determine a set of parameter configuration formats that is set according to the reference signal port group.

The configuring module 62 is configured to perform parameter configuration for the reference signal by using the parameter configuration format determined by the determining module 61, and send the reference signal to a terminal.

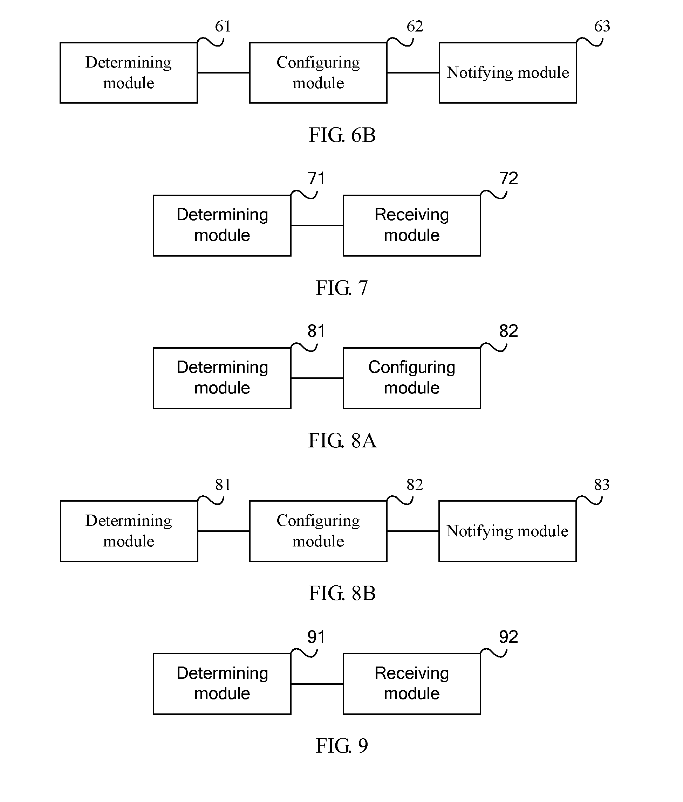

As shown in FIG. 6B, the apparatus provided by this embodiment may further include a notifying module 63, configured to notify, by using signaling, the terminal of the parameter configuration format that is used by the configuring module 62 when performing parameter configuration for the reference signal.

The parameter of the reference signal in this embodiment includes one or a combination of multiple ones of the following information: quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

Reference may be made to the description in the method embodiment illustrated in FIG. 1, which is not described repeatedly in the embodiment.

According to the reference signal sending apparatus provided by this embodiment of the present invention, at least two sets of parameter configuration formats are configured on a base station and a terminal for a reference signal, at least one parameter in different parameter configuration formats of the reference signal has a different configuration granularity. When the base station configures the parameter of the reference signal, the base station selects the parameter configuration format of the configuration granularity of the parameter of the reference signal from all parameter configuration formats of the reference signal. Because the base station has at least two sets of parameter configuration formats to perform parameter configuration for the reference signal, an objective of performing accurate parameter configuration for the reference signal may be achieved, which can improve accuracy of reference signal resource scheduling and the system spectral efficiency, and reduce a signaling overhead.

FIG. 7 is a schematic structural diagram of a parameter receiving apparatus according to an embodiment of the present invention. As shown in FIG. 7, the apparatus provided by this embodiment includes a determining module 71 and a receiving module 72.

The determining module 71 is configured to determine, according to notification signaling or a set condition of a base station, a parameter configuration format for the reference signal from at least two sets of parameter configuration formats, where the reference signal is configured with at least two sets of parameter configuration formats of the reference signal, and at least one parameter in different parameter configuration formats of the reference signal has a different configuration granularity.

The configuration granularity of the parameter is: performing configuration according to a reference signal resource, performing configuration according to a reference signal port, or performing configuration according to a reference signal port group. The parameter of the reference signal in this embodiment includes one or a combination of multiple ones of the following information: quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

The receiving module 72 is configured to determine, by using the parameter configuration format determined by the determining module 71, a parameter that is of the reference signal and received from the base station.

Further, the receiving module is further configured to receive signaling that is sent by the base station and notifies the terminal of the parameter configuration format that is used when performing parameter configuration for the reference signal.

Reference may be made to the description in the method embodiment illustrated in FIG. 3, which is not described repeatedly in this embodiment.

FIG. 8A is a schematic structural diagram of another reference signal sending apparatus according to an embodiment of the present invention. As shown in FIG. 8A, the apparatus provided by this embodiment includes a determining module 81 and a configuring module 82.

The determining module 81 is configured to determine a parameter configuration subformat for a key parameter of the reference signal, wherein the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity. Further, the determining module is specifically configured to determine, according to the configuration granularity of the parameter of the reference signal, a set of parameter configuration subformats suitable for the configuration granularity of the parameter of the reference signal for the key parameter of the reference signal.

The configuration granularity of the parameter is: performing configuration according to a reference signal resource, performing configuration according to a reference signal port, or performing configuration according to a reference signal port group.

Further, the determining module is specifically configured to: when the configuration granularity of the parameter of the reference signal is performing setting according to the reference signal resource, determine a set of parameter configuration subformats suitable for the reference signal resource for the key parameter; or when the configuration granularity of the parameter of the reference signal is performing setting according to the reference signal port, a set of parameter configuration subformats suitable for the reference signal port for the key parameter from all parameter configuration subformats of the key parameter; or when the configuration granularity of the parameter of the reference signal is performing setting according to the reference signal port group, a set of parameter configuration subformats suitable for the reference signal port group for the key parameter from all parameter configuration subformats of the key parameter. For example, the determining module is specifically configured to: when one of the reference signal resource is allocated to the same access point, determine a set of parameter configuration subformats that is set according to the reference signal resource for the key parameter; or when all ports in one of the reference signal port group are allocated to a same access point, determine a set of parameter configuration subformats that is set according to the reference signal port group for the key parameter; or when one of the reference signal resource port group is allocated to different access points, determine a set of parameter configuration subformats that is set according to the reference signal port.

The configuring module 82 is configured to perform, by using the parameter configuration format of the reference signal for that the parameter configuration subformat is determined by the determining module 81, parameter configuration for the reference signal, and send the reference signal to a terminal.

As shown in FIG. 8B, the apparatus provided by this embodiment further includes a notifying module 83, configured to notify, by using signaling, the terminal of the parameter configuration subformat used by the configuring module 82 for the key parameter.

The parameter of the reference signal in this embodiment includes one or a combination of multiple ones of the following information: quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

Reference may be made to the description in the method embodiment illustrated in FIG. 4, which is not described repeatedly in the embodiment.

According to a reference signal sending apparatus provided by this embodiment of the present invention, at least one parameter in a parameter configuration format of a reference signal is configured with a parameter configuration subformat having a different configuration granularity. When a base station configures the parameter for the reference signal, the base station determines a parameter configuration subformat for a key parameter, in the parameter configuration format of the reference signal, that is configured with the determined parameter configuration subformat having a different configuration granularity. Because the parameter configuration subformat having a different granularity may be selected when configuration is performed for the key parameter of the reference signal, an objective of performing accurate parameter configuration for the reference signal is achieved, which can also improve accuracy of reference signal resource scheduling and the system spectral efficiency, and reduce a signaling overhead.

FIG. 9 is a schematic structural diagram of another parameter receiving apparatus according to an embodiment of the present invention. As shown in FIG. 9, the apparatus provided by this embodiment includes a determining module 91 and a receiving module 92.

The determining module 91 is configured to: according to notification signaling or a set condition of a base station, determine a parameter configuration subformat for a key parameter of a reference signal, where the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity.

The configuration granularity of the parameter is: performing configuration according to a reference signal resource, performing configuration according to a reference signal port, or performing configuration according to a reference signal port group. The parameter of the reference signal includes one or a combination of multiple ones of the following information: quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

The receiving module 92 is configured to: by using the parameter configuration format of the reference signal for which the parameter configuration subformat is determined by the determining module 91, determine a parameter that is of the reference signal and received from the base station. Further, the receiving module is further configured to receive signaling that is sent by the base station and notifies the terminal of the parameter configuration subformat that is used by the key parameter.

Reference may be made to the description in the method embodiment illustrated in FIG. 5, which is not described repeatedly in the embodiment.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A reference signal sending method, wherein a reference signal is configured with at least two sets of parameter configuration formats of the reference signal, and at least one parameter in different parameter configuration formats of the reference signal has a different configuration granularity, and the method comprises:
determining, by a base station, a parameter configuration format for the reference signal from the at least two sets of parameter configuration formats; and
performing, by the base station, parameter configuration for the reference signal by using the determined parameter configuration format, and sending the reference signal to a terminal.

2. The method according to claim 1, wherein the configuration granularity of the parameter is: performing configuration according to a reference signal resource, performing configuration according to a reference signal port, or performing configuration according to a reference signal port group.

3. The method according to claim 1 or 2, wherein the determining, by a base station, a parameter configuration format for the reference signal from the at least two sets of parameter configuration formats comprises:
determining, by the base station according to the configuration granularity of the parameter of the reference signal, a set of parameter configuration formats suitable for the configuration granularity of the parameter of the reference signal.

4. The method according to claim 3, wherein the determining, by the base station, a set of parameter configuration formats suitable for the configuration granularity of the parameter of the reference signal according to the configuration granularity of the parameter of the reference signal comprises:
determining, when the configuration granularity of the parameter of the reference signal is performing configuration according to the reference signal resource, a set of parameter configuration formats suitable for the reference signal resource; or,
determining, when the configuration granularity of the parameter of the reference signal is performing configuration according to the reference signal port, a set of parameter configuration formats suitable for the reference signal port; or,
determining, when the configuration granularity of the parameter of the reference signal is performing configuration according to the reference signal port group, a set of parameter configuration formats suitable for the reference signal port group.

5. The method according to claim 4, wherein:
the determining, when the configuration granularity of the parameter of the reference signal is performing configuration according to the reference signal resource, a set of parameter configuration formats suitable for the reference signal resource comprises: determining, when one of the reference signal resource is allocated to one access point, a set of parameter configuration formats that is set according to the reference signal resource; or
the determining, when the configuration granularity of the parameter of the reference signal is performing configuration according to the reference signal port, a set of parameter configuration formats suitable for the reference signal port specifically comprises: determining, when one of the reference signal port group is allocated to different access points, a set of parameter configuration formats that is set according to the reference signal port; or
the determining, when the configuration granularity of the parameter of the reference signal is performing configuration according to the reference signal port group, a set of parameter configuration formats suitable for the reference signal port group specifically comprises: determining, when all ports in one of the reference signal resource port group are allocated to a same access point, a set of parameter configuration formats that is set according to the reference signal port group.

6. The method according to any one of claims 1 to 5, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

7. The method according to any one of claims 1 to 6, wherein the method further comprises:
notifying, by the base station by using signaling, the terminal of the parameter configuration format that is used when performing parameter configuration for the reference signal.

8. A parameter receiving method, wherein a reference signal is configured with at least two sets of parameter configuration formats of the reference signal, and at least one parameter in different parameter configuration formats of the reference signal has a different configuration granularity, and the method comprises:
determining, by a terminal according to notification signaling or a set condition of a base station, a parameter configuration format for the reference signal from the at least two sets of parameter configuration formats; and
determining, by the terminal by using the determined parameter configuration format, a parameter that is of the reference signal and received from the base station.

9. The method according to claim 8, wherein the configuration granularity of the parameter is: performing configuration according to a reference signal resource, performing configuration according to a reference signal port, or performing configuration according to a reference signal port group.

10. The method according to claim 8 or 9, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

11. The method according to any one of claims 8 to 10, wherein the method further comprises:
receiving signaling that is sent by the base station and notifies the terminal of the parameter configuration format that is used when performing parameter configuration for the reference signal.

12. A reference signal sending method, wherein at least one parameter in a parameter configuration format of a reference signal is configured with a parameter configuration subformat having a different configuration granularity, and the method comprises:
determining, by a base station, a parameter configuration subformat for a key parameter of the reference signal, wherein the key parameter, in the parameter configuration format of the reference signal, is configured with a parameter configuration subformat having a different configuration granularity; and
performing, by the base station by using the parameter configuration format of the reference signal for which the parameter configuration subformat is determined, parameter configuration for the reference signal, and sending the reference signal to a terminal.

13. The method according to claim 12, wherein the configuration granularity of the parameter is: performing configuration according to a reference signal resource, performing configuration according to a reference signal port, or performing configuration according to a reference signal port group.

14. The method according to claim 12 or 13, wherein the determining, by a base station, a parameter configuration subformat for a key parameter of the reference signal comprises:
determining, by the base station according to the configuration granularity of the parameter of the reference signal, a set of parameter configuration subformats suitable for the configuration granularity of the parameter of the reference signal for the key parameter of the reference signal.

15. The method according to claim 14, wherein the determining, by the base station according to the configuration granularity of the parameter of the reference signal, a set of parameter configuration subformats suitable for the configuration granularity of the parameter of the reference signal for the key parameter of the reference signal comprises:
determining, when the configuration granularity of the parameter of the reference signal is performing setting according to the reference signal resource, a set of parameter configuration subformats suitable for the reference signal resource for the key parameter; or,
determining, when the configuration granularity of the parameter of the reference signal is performing setting according to the reference signal port, a set of parameter configuration subformats suitable for the reference signal port for the key parameter from all parameter configuration subformats of the key parameter; or
determining, when the configuration granularity of the parameter of the reference signal is performing setting according to the reference signal port group, a set of parameter configuration subformats suitable for the reference signal port group for the key parameter from all parameter configuration subformats of the key parameter.

16. The method according to claim 15, wherein:
the determining, when the configuration granularity of the parameter of the reference signal is performing setting according to the reference signal resource, a set of parameter configuration subformats suitable for the reference signal resource for the key parameter from all parameter configuration subformats of the key parameter specifically comprises: determining, when one of the reference signal resource is allocated to a same access point, a set of parameter configuration subformats that is set according to the reference signal resource for the key parameter; or
the determining, when the configuration granularity of the parameter of the reference signal is performing setting according to the reference signal port group, a set of parameter configuration subformats suitable for the reference signal port group for the key parameter from all parameter configuration subformats of the key parameter specifically comprises: determining, when all ports in one of the reference signal resource port group are allocated to a same access point, a set of parameter configuration subformats that is set according to the reference signal port group for the key parameter; or
the determining, when the configuration granularity of the parameter of the reference signal is performing setting according to the reference signal port, a set of parameter configuration subformats suitable for the reference signal port for the key parameter from all parameter configuration subformats of the key parameter specifically comprises: determining, when one of the reference signal port group is allocated to different access points, a set of parameter configuration subformats that is set according to the reference signal port for the key parameter.

17. The method according to any one of claims 13 to 16, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

18. The method according to any one of claims 13 to 17, wherein the method further comprises:
notifying, by the base station by using signaling, the terminal of the parameter configuration subformat that is used by the key parameter.

19. A parameter receiving method, wherein at least one parameter in a parameter configuration format of a reference signal is configured with a parameter configuration subformat having a different configuration granularity, and the method comprises:
determining, by a terminal according to notification signaling or a set condition of a base station, a parameter configuration subformat for a key parameter of the reference signal, wherein the key parameter, in the parameter configuration format of the reference signal, is configured with a parameter configuration subformat having a different configuration granularity; and
determining, by the terminal by using the parameter configuration format of the reference signal for which the parameter configuration subformat is determined, a parameter that is of the reference signal and received from the base station.

20. The method according to claim 19, wherein the configuration granularity of the parameter is: performing configuration according to a reference signal resource, performing configuration according to a reference signal port, or performing configuration according to a reference signal port group.

21. The method according to claim 19 or 20, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

22. The method according to any one of claims 19 to 21, wherein the method further comprises:
receiving signaling that is sent by the base station and notifies the terminal of the parameter configuration subformat that is used by the key parameter.

23. A reference signal sending apparatus, comprising:
a determining module, configured to determine a parameter configuration format for the reference signal from at least two sets of parameter configuration formats, wherein the reference signal is configured with at least two sets of parameter configuration formats of the reference signal, and at least one parameter in different parameter configuration formats of the reference signal has a different configuration granularity; and
a configuring module, configured to perform parameter configuration for the reference signal by using the parameter configuration format determined by the determining module, and send the reference signal to a terminal.

24. The apparatus according to claim 23, wherein the configuration granularity of the parameter is: performing configuration according to a reference signal resource, performing configuration according to a reference signal port, or performing configuration according to a reference signal port group.

25. The apparatus according to claim 23 or 24, wherein the determining module is specifically configured to determine, according to the configuration granularity of the parameter of the reference signal, a set of parameter configuration formats suitable for configuration granularity of a parameter of the reference signal.

26. The apparatus according to claim 23 or 24, wherein the determining module is specifically configured to: when the configuration granularity of the parameter of the reference signal is performing configuration according to the reference signal resource, determine a set of parameter configuration formats suitable for the reference signal resource; or when the configuration granularity of the parameter of the reference signal is performing configuration according to the reference signal port, determine a set of parameter configuration formats suitable for the reference signal port; or when the configuration granularity of the parameter of the reference signal is performing configuration according to the reference signal port group, determine a set of parameter configuration formats suitable for the reference signal port group.

27. The apparatus according to claim 23 or 24, wherein the determining module is specifically configured to: when one of the reference signal resource is allocated to one access point, determine a set of parameter configuration formats that is set according to the reference signal resource; or when one of the reference signal port group is allocated to different access points, determine a set of parameter configuration formats that is set according to the reference signal port; or when all ports in one of the reference signal resource port group are allocated to a same access point, determine a set of parameter configuration formats that is set according to the reference signal port group.

28. The apparatus according to any one of claims 23 to 27, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

29. The apparatus according to any one of claims 23 to 28, further comprising:
a notifying module, configured to notify, by using signaling, the terminal of the parameter configuration format that is used when performing parameter configuration for the reference signal.

30. A parameter receiving apparatus, comprising:
a determining module, configured to determine, according to notification signaling or a set condition of a base station, a parameter configuration format for the reference signal from at least two sets of parameter configuration formats, wherein the reference signal is configured with at least two sets of parameter configuration formats of the reference signal, and at least one parameter in different parameter configuration formats of the reference signal has a different configuration granularity; and
a receiving module, configured to determine, by using the parameter configuration format determined by the determining module, a parameter that is of the reference signal and received from the base station.

31. The apparatus according to claim 30, wherein the configuration granularity of the parameter is: performing configuration according to a reference signal resource, performing configuration according to a reference signal port, or performing configuration according to a reference signal port group.

32. The apparatus according to claim 30 or 31, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

33. The apparatus according to any one of claims 30 to 32, wherein the receiving module is further configured to receive signaling that is sent by the base station and notifies the terminal of the parameter configuration format that is used when performing parameter configuration for the reference signal.

34. A reference signal sending apparatus, comprising:
a determining module, configured to determine a parameter configuration subformat for a key parameter of the reference signal, wherein the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity; and
a configuring module, configured to perform, by using the parameter configuration format of the reference signal for which the parameter configuration subformat is determined by the determining module, parameter configuration for the reference signal, and send the reference signal to a terminal.

35. The apparatus according to claim 34, wherein the configuration granularity of the parameter is: performing configuration according to a reference signal resource, performing configuration according to a reference signal port, or performing configuration according to a reference signal port group.

36. The apparatus according to claim 34 or 35, wherein the determining module is specifically configured to determine, according to the configuration granularity of the parameter of the reference signal, a set of parameter configuration subformats suitable for the configuration granularity of the parameter of the reference signal for the key parameter of the reference signal.

37. The apparatus according to claim 34 or 35, wherein the determining module is specifically configured to: when the configuration granularity of the parameter of the reference signal is performing setting according to the reference signal resource, determine a set of parameter configuration subformats suitable for the reference signal resource for the key parameter; or when the configuration granularity of the parameter of the reference signal is performing setting according to the reference signal port, a set of parameter configuration subformats suitable for the reference signal port for the key parameter from all parameter configuration subformats of the key parameter; or when the configuration granularity of the parameter of the reference signal is performing setting according to the reference signal port group, a set of parameter configuration subformats suitable for the reference signal port group for the key parameter from all parameter configuration subformats of the key parameter.

38. The apparatus according to claim 34 or 35, wherein the determining module is specifically configured to: when one of the reference signal resource is allocated to the same access point, determine a set of parameter configuration subformats that is set according to the reference signal resource for the key parameter; or when all ports in one of the reference signal port group are allocated to a same access point, determine a set of parameter configuration subformats that is set according to the reference signal port group for the key parameter; or when one of the reference signal resource port group is allocated to different access points, determine a set of parameter configuration subformats that is set according to the reference signal port.

39. The apparatus according to any one of claims 34 to 38, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

40. The apparatus according to any one of claims 34 to 39, further comprising: a notifying module, configured to notify, by using signaling, the terminal of the parameter configuration subformat that is used by the key parameter.

41. A parameter receiving apparatus, comprising:
a determining module, configured to: according to notification signaling or a set condition of a base station, determine a parameter configuration subformat for a key parameter of the reference signal, wherein the key parameter, in the parameter configuration format of the reference signal, is configured with a parameter configuration subformat having a different configuration granularity, and at least one parameter in the parameter configuration format of the reference signal is configured with a parameter configuration subformat having a different configuration granularity; and
a receiving module, configured to: by using the parameter configuration format of the reference signal for which the parameter configuration subformat is determined by the determining module, determine a parameter that is of the reference signal and received from the base station.

42. The apparatus according to claim 41, wherein the configuration granularity of the parameter is: performing configuration according to a reference signal resource, performing configuration according to a reference signal port, or performing configuration according to a reference signal port group.

43. The apparatus according to claim 41 or 42, wherein the parameter of the reference signal comprises one or a combination of multiple ones of the following information:
quantity of antenna ports, index number of reference signal resource configuration, index number of subframe configuration, power configuration information of the reference signal, virtual cell identity, index number of a reference signal pattern, period, index number of subframe offset, cyclic prefix type indication information, and timeslot number information.

44. The apparatus according to any one of claims 41 to 43, wherein the receiving module is further configured to receive signaling that is sent by the base station and notifies the terminal of the parameter configuration subformat that is used by the key parameter.
